# EUROPEAN PATENT APPLICATION

(11) **EP 4 803 337 A1**
(43) Date of publication of application: **09.09.2026**
(21) Application number: 24883932.6
(22) Date of filing: 13.06.2024
(51) Int. Cl.: B60K 6/26, B60K 6/38, B60K 6/36, B60K 6/54

(54) **HYBRID POWER SYSTEM AND VEHICLE**

(30) Priority: 31.10.2023 CN 202311434430
(71) Applicant: BYD Company Limited, Shenzhen, Guangdong 518118 (CN)
(72) Inventor: MA, Minghui, Shenzhen, Guangdong 518118 (CN); XU, Fei, Shenzhen, Guangdong 518118 (CN); WANG, Hui, Shenzhen, Guangdong 518118 (CN); FENG, Yuyang, Shenzhen, Guangdong 518118 (CN); GAO, Jun, Shenzhen, Guangdong 518118 (CN)
(74) Representative: Mathys & Squire
(86) International application number: PCT/CN2024/099015
(87) International publication number: WO 2025/091921

(57) **Abstract**

A hybrid power system and a vehicle are provided. The hybrid power system includes an engine, a longitudinally mounted first electric motor, a longitudinally mounted second electric motor, and a first clutch. The first clutch is drivingly connected separately to the engine and the longitudinally mounted first electric motor. The hybrid power system includes a first state. When in the first state, the first clutch disconnects the engine from the longitudinally mounted first electric motor, and the longitudinally mounted first electric motor and the longitudinally mounted second electric motor jointly drive the vehicle.

## Description

This application claims priority to Chinese Patent Application No. 202311434430.X, filed with the China National Intellectual Property Administration on October 31, 2023 and entitled "HYBRID POWER SYSTEM AND VEHICLE", which is incorporated herein by reference in its entirety.

### TECHNICAL FIELD

The present disclosure relates to the field of vehicle technologies, and in particular, to a hybrid power system and a vehicle.

### BACKGROUND

A conventional hybrid power system usually includes an engine, a generator, and an electric motor that are connected in series, in parallel, or in a series-parallel configuration to drive the vehicle forward. When the vehicle operates in a high load condition, the engine may drive the generator to generate electric energy, and the electric energy is transmitted to a battery or the electric motor by using a controller. The electric motor drives a differential by using a transmission mechanism to control movement of the vehicle. When the vehicle operates in a low load condition, the electric motor may directly drive the differential by using the transmission mechanism to drive the vehicle to move.

However, in the configuration of an existing hybrid power system, power performance is relatively low when the vehicle is in a pure electric operating condition, and therefore, power demand for hill climbing or rapid acceleration cannot be met.

### SUMMARY

An objective of the present disclosure is to provide a hybrid power system and a vehicle, so as to resolve a problem of relatively low power performance of an existing hybrid power system in a pure electric operating condition.

To implement the objective of the present disclosure, according to a first aspect, the present disclosure provides a hybrid power system. The hybrid power system includes an engine, a longitudinally mounted first electric motor, a longitudinally mounted second electric motor, and a first clutch. The first clutch is drivingly connected separately to the engine and the longitudinally mounted first electric motor. The hybrid power system includes a first state. When in the first state, the first clutch disconnects the engine from the longitudinally mounted first electric motor, and the longitudinally mounted first electric motor and the longitudinally mounted second electric motor jointly drive the vehicle.

In an implementation, the hybrid power system further includes a transmission, and the transmission has at least two gear positions. The hybrid power system includes a second state. When in the second state, the first clutch disconnects the engine from the longitudinally mounted first electric motor, the longitudinally mounted first electric motor and the longitudinally mounted second electric motor jointly drive the vehicle, and the transmission shifts between the at least two gear positions.

In an implementation, the transmission includes a first gear position and a second gear position, and the first gear position and the second gear position have different transmission ratios. The second state includes a first sub-state and a second sub-state. When in the first sub-state, the longitudinally mounted first electric motor drives the vehicle by using the first gear position. When in the second sub-state, the longitudinally mounted first electric motor drives the vehicle by using the second gear position.

In an implementation, the first clutch is reused as a parking power generation clutch, and the first clutch connects the engine to the longitudinally mounted first electric motor.

In an implementation, the transmission includes an input shaft, two second clutches, and an output shaft. The two second clutches are disposed back-to-back, and the two second clutches are both disposed on the input shaft or the output shaft.

In an implementation, the transmission includes an input shaft, two second clutches, and an output shaft. The two second clutches are staggered. One of the two second clutches is disposed on the input shaft, and the other is disposed on the output shaft.

In an implementation, the transmission includes an input shaft, a dual clutch, and an output shaft. The dual clutch is disposed on the input shaft or disposed on the output shaft. An end portion of the dual clutch is disposed close to an end of the longitudinally mounted first electric motor, or an end portion of the dual clutch is disposed close to an end of the longitudinally mounted second electric motor.

In an implementation, the first clutch is disposed in the longitudinally mounted first electric motor.

In an implementation, the longitudinally mounted first electric motor and the longitudinally mounted second electric motor are configured such that: operating states of the longitudinally mounted first electric motor and the longitudinally mounted second electric motor are determined based on drive demand information of the vehicle, a target first efficiency map corresponding to the longitudinally mounted first electric motor, and a target second efficiency map corresponding to the longitudinally mounted second electric motor.

In an implementation, the longitudinally mounted first electric motor and the longitudinally mounted second electric motor are configured such that: when a torque demand corresponding to the drive demand information of the vehicle falls within torque corresponding to the target first efficiency map, the longitudinally mounted first electric motor is controlled to independently drive the vehicle; and when the torque demand corresponding to the drive demand information of the vehicle falls within torque corresponding to the target second efficiency map, the longitudinally mounted second electric motor is controlled to independently drive the vehicle.

In an implementation, the longitudinally mounted first electric motor and the longitudinally mounted second electric motor are configured such that: when the torque demand corresponding to the drive demand information of the vehicle exceeds the torque corresponding to the target first efficiency map or exceeds the torque corresponding to the target second efficiency map, and the torque demand corresponding to the drive demand information of the vehicle does not exceed torque corresponding to a sum of the target first efficiency map and the target second efficiency map, the longitudinally mounted first electric motor and the longitudinally mounted second electric motor are controlled to jointly drive the vehicle.

In an implementation, when the longitudinally mounted first electric motor and the longitudinally mounted second electric motor jointly drive the vehicle, the longitudinally mounted first electric motor and the longitudinally mounted second electric motor are configured such that: between the longitudinally mounted first electric motor and the longitudinally mounted second electric motor, the one with higher power outputs maximum torque.

According to a second aspect, the present disclosure further provides a vehicle. The vehicle includes the hybrid power system according to any one of the implementations of the first aspect.

In the technical solution of the present disclosure, the first state is a low-gear assistance mode of a generator of the vehicle, and may be used to provide assistance to the longitudinally mounted second electric motor when the vehicle is at a constant speed or a medium speed. In the low-gear assistance mode of the generator, the vehicle outputs power to the hybrid power system by using both the longitudinally mounted first electric motor and the longitudinally mounted second electric motor. The power output by the longitudinally mounted first electric motor is transmitted to a differential through the transmission, and the power output by the longitudinally mounted second electric motor is transmitted to the differential through a second transmission path provided by a transmission assembly.

### BRIEF DESCRIPTION OF DRAWINGS

To describe the technical solutions in implementations of the present disclosure or the conventional technology more clearly, the following briefly describes the accompanying drawings required for describing the implementations or the conventional technology. Clearly, the accompanying drawings in the following description show merely some implementations of the present disclosure, and a person of ordinary skill in the art may still derive other drawings from these accompanying drawings without creative efforts.
FIG. 1 is a schematic diagram of a structure of a hybrid power system according to an embodiment of the present disclosure;
FIG. 2 is a schematic diagram of another structure of a hybrid power system according to an embodiment of the present disclosure;
FIG. 3 is a schematic diagram of still another structure of a hybrid power system according to an embodiment of the present disclosure;
FIG. 4 is a schematic diagram of yet another structure of a hybrid power system according to an embodiment of the present disclosure;
FIG. 5 is a schematic diagram of still yet another structure of a hybrid power system according to an embodiment of the present disclosure;
FIG. 6 is a schematic diagram of power output of a hybrid power system in a first mode according to an embodiment of the present disclosure;
FIG. 7 is a schematic diagram of power output of a hybrid power system in a second mode according to an embodiment of the present disclosure;
FIG. 8 is a schematic diagram of power output of a hybrid power system in a third mode according to an embodiment of the present disclosure;
FIG. 9 is a schematic diagram of power output of a hybrid power system in a fourth mode according to an embodiment of the present disclosure;
FIG. 10 is a schematic diagram of power output of a hybrid power system in a fifth mode according to an embodiment of the present disclosure;
FIG. 11 is a schematic diagram of power output of a hybrid power system in a sixth mode according to an embodiment of the present disclosure;
FIG. 12 is a schematic diagram of power output of a hybrid power system in a seventh mode according to an embodiment of the present disclosure;
FIG. 13 is a schematic diagram of power output of a hybrid power system in an eighth mode according to an embodiment of the present disclosure;
FIG. 14 is a schematic diagram of power output of a hybrid power system in a ninth mode according to an embodiment of the present disclosure;
FIG. 15 is a schematic diagram of power output of a hybrid power system in a tenth mode according to an embodiment of the present disclosure;
FIG. 16 is a control strategy diagram of a hybrid power system according to an embodiment of the present disclosure; and
FIG. 17 is a schematic diagram in which a hybrid power system switches between various modes according to an embodiment of the present disclosure.

### DESCRIPTION OF EMBODIMENTS

The technical solutions in implementations of the present disclosure are clearly and completely described below with reference to the accompanying drawings in the implementations of the present closure. Obviously, the described implementations are merely some, rather than all, of the implementations of this application. Based on implementations of the present disclosure, all other embodiments obtained by a person of ordinary skill in the art without creative efforts fall within the protection scope of the present disclosure.

It will be noted that when an assembly is referred to as being "fastened to" another assembly, the assembly may be directly fastened to another assembly, or there may be an assembly between the assembly and another assembly. When an assembly is considered as being "connected to" another assembly, the assembly may be directly connected to another assembly, or there may be an assembly between the assembly and another assembly.

Unless otherwise defined, all technical and scientific terms used in the present disclosure have the same meaning as those commonly understood by those skilled in the art that belong to the present disclosure. The terms used in the present disclosure are merely intended to describe specific embodiments, and are not intended to limit the present disclosure. The term "or/and" used in the present disclosure includes any or all combinations of one or more related listed items.

Some implementations of the present disclosure are described in detail below with reference to the accompanying drawings. In the case of no conflict, the following embodiments and features in the embodiments may be mutually combined.

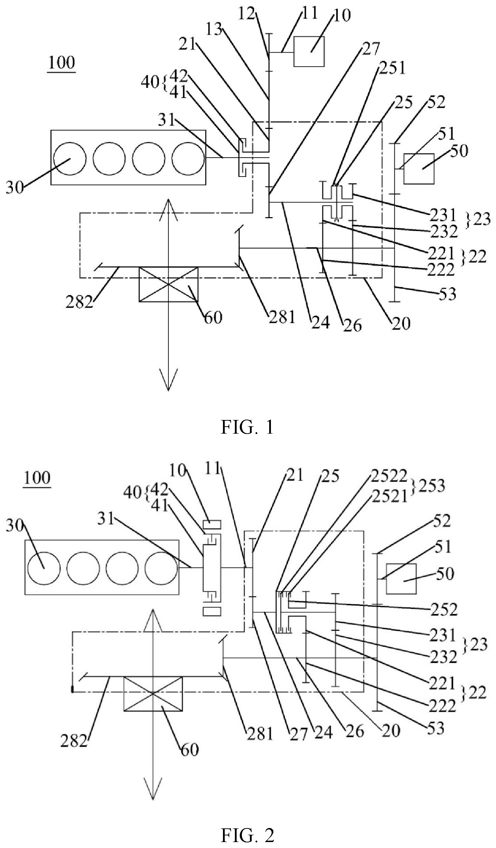

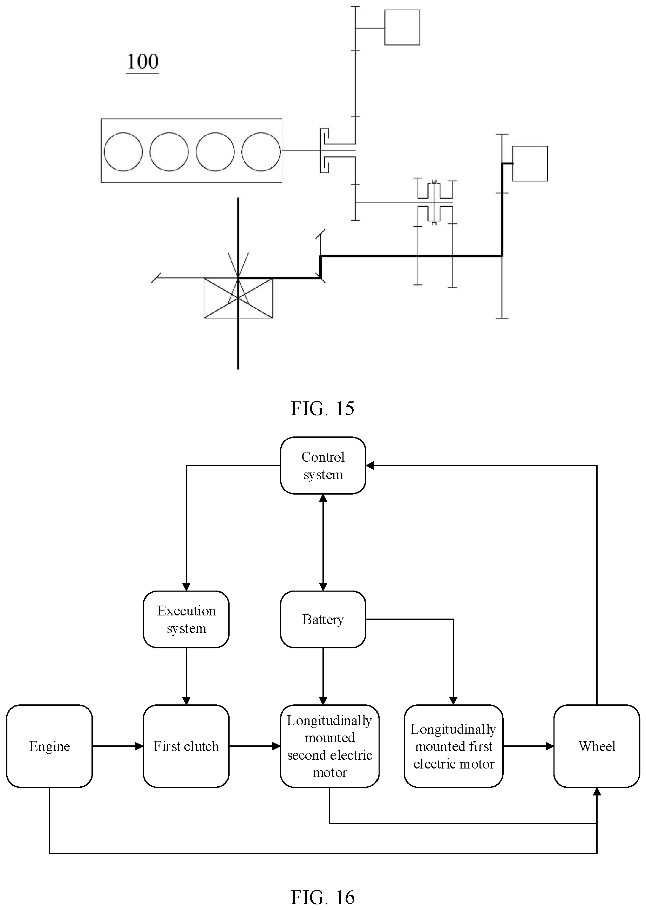

The present disclosure provides a hybrid power system 100. Referring to FIG. 1 and FIG. 16, the hybrid power system 100 includes an engine 30, a longitudinally mounted first electric motor 10, a longitudinally mounted second electric motor 50, and a first clutch 40. The first clutch 40 is drivingly connected separately to the engine 30 and the longitudinally mounted first electric motor 10. The hybrid power system 100 includes a first state. When in the first state, the first clutch 40 disconnects the engine 30 from the longitudinally mounted first electric motor 10, and the longitudinally mounted first electric motor 10 and the longitudinally mounted second electric motor 50 jointly drive a vehicle.

Specifically, the hybrid power system 100 further includes a transmission 20. The transmission 20 includes a power input gear 21, and the longitudinally mounted first electric motor 10 is drivingly connected to the power input gear 21. The longitudinally mounted first electric motor 10 is electrically connected to an external battery pack (not shown in the figure). It will be understood that electric energy output by the battery pack enables the longitudinally mounted first electric motor 10 to output power, and the power output by the longitudinally mounted first electric motor 10 may be transmitted to the power input gear 21 and drive the power input gear 21 to rotate, thereby driving the transmission 20 to output power externally. In this way, a power output function of the hybrid power system 100 of the present disclosure is implemented.

In an implementation, the engine 30 is drivingly connected to the transmission 20. The engine 30 includes a drive shaft 31, and the drive shaft 31 is drivingly connected to the transmission 20. The engine 30 is drivingly connected to the power input gear 21. It will be understood that power output by the engine 30 may be transmitted to the power input gear 21 and drive the power input gear 21 to rotate, thereby driving the transmission 20 to output power externally. In this way, the power output function of the hybrid power system 100 of the present disclosure is implemented.

In an implementation, the longitudinally mounted first electric motor 10 is electrically connected to the external battery pack (not shown in the figure). It will be understood that the electric energy output by the battery pack enables the longitudinally mounted first electric motor 10 to output power, and the power output by the longitudinally mounted first electric motor 10 may be transmitted to the transmission 20 and drive the transmission 20 to rotate, so that the transmission 20 outputs power externally. In this way, the power output function of the hybrid power system 100 of the present disclosure is implemented.

In an implementation, the longitudinally mounted first electric motor 10 is configured as a generator, and the transmission 20 is also drivingly connected to the longitudinally mounted first electric motor 10. It will be understood that, when the engine 30 drives the transmission 20 to rotate, a part of power is further transmitted to the longitudinally mounted first electric motor 10 and drives a rotor of the longitudinally mounted first electric motor 10 to rotate and generate electric energy. The electric energy generated by the longitudinally mounted first electric motor 10 can be transmitted to the battery pack, thereby implementing charging of the battery pack. In this way, a charging function of the hybrid power system 100 of the present disclosure is implemented.

In an implementation, the longitudinally mounted first electric motor 10 includes a first power shaft 11, a first power gear 12, and a first intermediate gear 13. The first power shaft 11 is fixedly connected to the first power gear 12, and the first intermediate gear 13 meshes with both the first power gear 12 and the power input gear 21. It will be understood that the power transmitted by the longitudinally mounted first electric motor 10 is output from the first power shaft 11, and is transmitted to the power input gear 21 sequentially through the first power gear 12 and the first intermediate gear 13, to drive the power input gear 21 to rotate, thereby driving the transmission 20 to rotate and output power externally.

In an implementation, the transmission 20 further includes a second intermediate gear 27. The second intermediate gear 27 is fixedly connected to an input shaft 24, and meshes with the power input gear 21. It will be understood that the power transmitted to the power input gear 21 can be transmitted to the input shaft 24 through the second intermediate gear 27, and is transmitted externally through a first-speed gear pair 22 or a second-speed gear pair 23.

The longitudinally mounted second electric motor 50 includes a second power shaft 51, a second power gear 52, and a third intermediate gear 53. The second power shaft 51 is fixedly connected to the second power gear 52, the third intermediate gear 53 is fixedly connected to an output shaft 26, and the second power gear 52 meshes with the third intermediate gear 53. It will be understood that power output by the longitudinally mounted second electric motor 50 is output from the second power shaft 51, is transmitted to the output shaft 26 sequentially through the second power gear 52 and the third intermediate gear 53, and is output externally through the output shaft 26.

In an implementation, the first clutch 40 includes a first end 41 and a second end 42. The first end 41 is connected to the engine 30, and the second end 42 is connected to the power input gear 21. The first end 41 can be coupled to or disconnected from the second end 42 to implement control of power output of the engine 30. It will be understood that when the first end 41 is coupled to the second end 42, the power output by the engine 30 is transmitted to the power input gear 21. A part of the power is transmitted to the longitudinally mounted first electric motor 10 through the power input gear 21, and electric energy is generated and stored in the battery pack. Another part of the power is transmitted to the transmission 20, and drives the transmission 20 to output power externally.

In this way, the first clutch 40 is disposed in the hybrid power system 100 to control engagement and disengagement of power transmission between the engine 30 and the power input gear 21, so that when the first clutch 40 is disconnected, the longitudinally mounted first electric motor 10 can drive the power input gear 21 to rotate. This enables the hybrid power system 100 of the present disclosure to ensure power output while reducing use of the engine 30, thereby lowering fuel consumption of the hybrid power system 100 of the present disclosure.

The first clutch 40 is connected between the drive shaft 31 and the power input gear 21. As shown in FIG. 1, based on that each first clutch 40 has a first end 41 and a second end 42 that are coaxially disposed, the second end 42 is at least partially accommodated in the first end 41, and the first end 41 is rotatably connected to the second end 42. In addition, when the first clutch 40 is coupled, the first end 41 and the second end 42 are also coupled to each other, thereby implementing synchronous rotation of the first end 41 and the second end 42. As shown in FIG. 1, based on that the first end 41 is fixedly connected to the drive shaft 31, and the second end 42 is fixedly connected to the power input gear 21. It will be understood that when the first clutch 40 is coupled, the drive shaft 31 can drive the power input gear 21 to rotate synchronously.

In an implementation, the hybrid power system 100 further includes a differential 60, and the transmission 20 further includes a first bevel gear 281 and a second bevel gear 282. The first bevel gear 281 is fixedly connected to an end portion of the output shaft 26 away from the longitudinally mounted second electric motor 50, and the second bevel gear 282 meshes with the first bevel gear 281. The second bevel gear 282 is further fixedly connected to an input end of the differential 60. The differential 60 is drivingly connected to an external wheel (not shown in the figure). It will be understood that the power transmitted to the output shaft 26 is transmitted to the differential 60 through the first bevel gear 281 and the second bevel gear 282 and drives the wheel to rotate through the differential 60. In addition, based on the fact that the differential 60 can enable two connected wheels to rotate at different speeds, disposing the differential 60 can enable the hybrid power system 100 of the present disclosure to operate in different operating conditions.

In this way, by means of cooperation among the longitudinally mounted first electric motor 10, the longitudinally mounted second electric motor 50, and the engine 30 in the hybrid power system 100 of the present disclosure, the hybrid power system 100 of the present disclosure can output different power, and switching of output power of the hybrid power system 100 of the present disclosure can be implemented, thereby expanding use scenarios of the hybrid power system 100 of the present disclosure.

Further, when in a first state, the first clutch 40 disconnects the engine 30 from the longitudinally mounted first electric motor 10, and the longitudinally mounted first electric motor 10 and the longitudinally mounted second electric motor 50 jointly drive the vehicle. When the first clutch 40 is disconnected, the engine 30 does not output power externally, and the longitudinally mounted first electric motor 10 and the longitudinally mounted second electric motor 50 output power externally. Electric energy from the battery pack is transmitted to the longitudinally mounted first electric motor 10 and the longitudinally mounted second electric motor 50, and the longitudinally mounted first electric motor 10 and the longitudinally mounted second electric motor 50 output power. The power from the longitudinally mounted first electric motor 10 is transmitted to the differential 60 sequentially through the transmission 20, the output shaft 26, the first bevel gear 281, and the second bevel gear 282, and is output externally by the differential 60. The power from the longitudinally mounted second electric motor 50 is output from the second power shaft 51, is transmitted to the differential 60 sequentially through the second power gear 52, the third intermediate gear 53, the output shaft 26, the first bevel gear 281, and the second bevel gear 282, and is output externally by the differential 60. It will be understood that the power output by the longitudinally mounted first electric motor 10 and the longitudinally mounted second electric motor 50 is combined on the output shaft 26 and is transmitted to the differential 60, and is output externally by the differential 60.

In the technical solution of the present disclosure, the first state is a low-gear assistance mode of the generator of the vehicle, and may be used to provide assistance to the longitudinally mounted second electric motor 50 when the vehicle is at a constant speed or a medium speed. In the low-gear assistance mode of the generator, the vehicle outputs power to the hybrid power system 100 by using both the longitudinally mounted first electric motor 10 and the longitudinally mounted second electric motor 50. The power output by the longitudinally mounted first electric motor 10 is transmitted to the differential 60 through the transmission 20, and the power output by the longitudinally mounted second electric motor 50 is transmitted to the differential 60 through a second transmission path provided by a transmission assembly.

In an implementation, referring to FIG. 1, the transmission 20 has at least two gear positions. The hybrid power system 100 includes a second state. When in the second state, the first clutch 40 disconnects the engine 30 from the longitudinally mounted first electric motor 10, the longitudinally mounted first electric motor 10 and the longitudinally mounted second electric motor 50 jointly drive the vehicle, and the transmission 20 shifts between the at least two gear positions.

Specifically, the transmission 20 further includes a first drive gear 221, a first power output gear 222, a second drive gear 231, and a second power output gear 232. The first drive gear 221 is spaced apart from the second drive gear 231. The first power output gear 222 is spaced apart from the second power output gear 232. The first drive gear 221 is drivingly connected to the first power output gear 222 to form the first-speed gear pair 22. The second drive gear 231 is drivingly connected to the second power output gear 232 to form the second-speed gear pair 23.

The transmission 20 further includes the input shaft 24, a power switching assembly 25, and the output shaft 26. The first drive gear 221 and the second drive gear 231 are sleeved on a periphery of the input shaft 24, and the first power output gear 222 and the second power output gear 232 are sleeved on and fastened to a periphery of the output shaft 26.

As shown in FIG. 1 and FIG. 2, the power switching assembly 25 is disposed between the first drive gear 221 and the input shaft 24, and between the second drive gear 231 and the input shaft 24. The power switching assembly 25 implements a fixed connection between the input shaft 24 and the first drive gear 221 or the second drive gear 231. It will be understood that when the power switching assembly 25 fixedly connects the first drive gear 221 to the input shaft 24, power from the first drive gear 221 can be transmitted to the first power output gear 222. When the power switching assembly 25 fixedly connects the second drive gear 231 to the input shaft 24, power from the second drive gear 231 can be transmitted to the second power output gear 232.

In other words, the power switching assembly 25 can control power to switch from the first state in which the power flows through the first-speed gear pair 22 to the second state in which the power flows through the second-speed gear pair 23. A transmission ratio of the first-speed gear pair 22 is different from a transmission ratio of the second-speed gear pair 23. It will be understood that the power switching assembly 25 can implement switching of transmission between the first-speed gear pair 22 and the second-speed gear pair 23, so that power input from the power input gear 21 can be output externally through the first-speed gear pair 22 and the second-speed gear pair 23 that have different transmission ratios, thereby expanding a power output range of the hybrid power system 100 of the present disclosure, so as to adapt to different operating scenarios.

For example, when the power switching assembly 25 fixedly connects the first drive gear 221 to the input shaft 24, the power input from the power input gear 21 is transmitted externally sequentially through the input shaft 24, the first drive gear 221, the first power output gear 222, and the output shaft 26, so that the hybrid power system 100 of the present disclosure outputs power externally with a corresponding rotational speed and torque under action of a transmission ratio between the first drive gear 221 and the first power output gear 222.

When the power switching assembly 25 fixedly connects the second drive gear 231 to the input shaft 24, the power input from the power input gear 21 is transmitted externally sequentially through the input shaft 24, the second drive gear 231, the second power output gear 232, and the output shaft 26, so that the hybrid power system 100 of the present disclosure outputs power externally with a corresponding rotational speed and torque under action of a transmission ratio between the second drive gear 231 and the second power output gear 232.

In an implementation, the power switching assembly 25 may alternatively be disposed between the first power output gear 222 and the output shaft 26, and between the second power output gear 232 and the output shaft 26. The first drive gear 221 and the second drive gear 231 are sleeved on and fastened to the periphery of the input shaft 24, and the first power output gear 222 and the second power output gear 232 are sleeved on the periphery of the output shaft 26.

When the power switching assembly 25 fixedly connects the first power output gear 222 to the output shaft 26, power from the first drive gear 221 can be transmitted to the first power output gear 222 and output externally through the output shaft 26. When the power switching assembly 25 fixedly connects the second power output gear 232 to the output shaft 26, power from the second drive gear 231 can be transmitted to the second power output gear 232 and output externally through the output shaft 26.

In other words, when disposed on the output shaft 26, the power switching assembly 25 can also control power to switch from the first state in which the power flows through the first-speed gear pair 22 to the second state in which the power flows through the second-speed gear pair 23. In this way, the power output range of the hybrid power system 100 of the present disclosure is expanded to adapt to different operating scenarios.

In an implementation, referring to FIG. 1, the transmission 20 includes a first gear position and a second gear position, and the first gear position and the second gear position have different transmission ratios. The second state includes a first sub-state and a second sub-state. When in the first sub-state, the longitudinally mounted first electric motor 10 drives the vehicle by using the first gear position. When in the second sub-state, the longitudinally mounted first electric motor 10 drives the vehicle by using the second gear position.

Specifically, the power switching assembly 25 includes a synchronizer 251. Each synchronizer 251 is slidably connected to the input shaft 24, and each synchronizer 251 rotates synchronously with the input shaft 24. In an axial direction of the input shaft 24, the synchronizer 251 is disposed between the first drive gear 221 and the second drive gear 231. The synchronizer 251 may slide toward the first drive gear 221 and engage with the first drive gear 221, thereby implementing coaxial transmission between the input shaft 24 and the first drive gear 221. In addition, the synchronizer 251 may alternatively slide toward the second drive gear 231 and engage with the second drive gear 231, thereby implementing coaxial transmission between the input shaft 24 and the second drive gear 231. In other words, the synchronizer 251 implements a power switching function of the hybrid power system 100 of the present disclosure.

In an implementation, when in the first sub-state, the synchronizer 251 fixedly connects the first drive gear 221 to the input shaft 24, the first clutch 40 is disconnected, the engine 30 does not output power externally, and the longitudinally mounted first electric motor 10 and the longitudinally mounted second electric motor 50 output power externally. The power from the longitudinally mounted first electric motor 10 is output from the first power shaft 11, is transmitted to the differential 60 sequentially through the first power gear 12, the first intermediate gear 13, the power input gear 21, the second intermediate gear 27, the input shaft 24, the first drive gear 221, the first power output gear 222, the output shaft 26, the first bevel gear 281, and the second bevel gear 282, and is output externally by the differential 60. For a transmission mode of the longitudinally mounted second electric motor 50, reference is made to the first state. Details are not described herein again.

In an implementation, when in the second sub-state, the synchronizer 251 fixedly connects the second drive gear 231 to the input shaft 24, the first clutch 40 is disconnected, the engine 30 does not output power externally, and the longitudinally mounted first electric motor 10 and the longitudinally mounted second electric motor 50 output power externally. The power from the longitudinally mounted first electric motor 10 is output from the first power shaft 11, is transmitted to the differential 60 sequentially through the first power gear 12, the first intermediate gear 13, the power input gear 21, the second intermediate gear 27, the input shaft 24, the second drive gear 231, the second power output gear 232, the output shaft 26, the first bevel gear 281, and the second bevel gear 282, and is output externally by the differential 60. For a transmission mode of the longitudinally mounted second electric motor 50, reference is made to the first state. Details are not described herein again.

In an implementation, the first clutch 40 is reused as a parking power generation clutch, and the first clutch 40 connects the engine 30 to the longitudinally mounted first electric motor 10.

Specifically, in this state, the synchronizer 251 is in a disengaged state, the first clutch 40 is coupled, the engine 30 outputs power externally, the longitudinally mounted first electric motor 10 is configured as a generator, and the longitudinally mounted second electric motor 50 does not output power. The power from the engine 30 is transmitted to the first power shaft 11 sequentially through the drive shaft 31, the first clutch 40, the power input gear 21, the first intermediate gear 13, and the first power gear 12, thereby enabling the rotor of the longitudinally mounted first electric motor 10 to rotate and generate electric energy.

The part of electric energy is transmitted and stored in the battery pack (not shown in the figure), so as to implement charging of the battery pack by the engine 30 of the hybrid power system 100 of the present disclosure.

In an implementation, referring to FIG. 2, the transmission 20 includes an input shaft 24, a dual clutch 253, and an output shaft 26. The dual clutch 253 is disposed on the input shaft 24 or on the output shaft 26. An end portion of the dual clutch 253 is disposed close to an end of the longitudinally mounted first electric motor 10, or an end portion of the dual clutch 253 is disposed close to an end of the longitudinally mounted second electric motor 50.

Specifically, the power switching assembly 25 includes a second clutch 252 (that is, does not include the synchronizer 251). In this case, there are two second clutches 252, that is, a first sub-clutch 2521 and a second sub-clutch 2522.

The first drive gear 221 meshes with the first power output gear 222, and the first sub-clutch 2521 is disposed between the first drive gear 221 and the input shaft 24. It will be understood that when the first sub-clutch 2521 is coupled, power transmitted by the input shaft 24 can be transmitted to the first drive gear 221 and output externally through the first power output gear 222.

The second drive gear 231 meshes with the second power output gear 232, and the second sub-clutch 2522 is disposed between the second drive gear 231 and the input shaft 24. It will be understood that when the second sub-clutch 2522 is coupled, power transmitted by the input shaft 24 can be transmitted to the second drive gear 231 and output externally through the second power output gear 232.

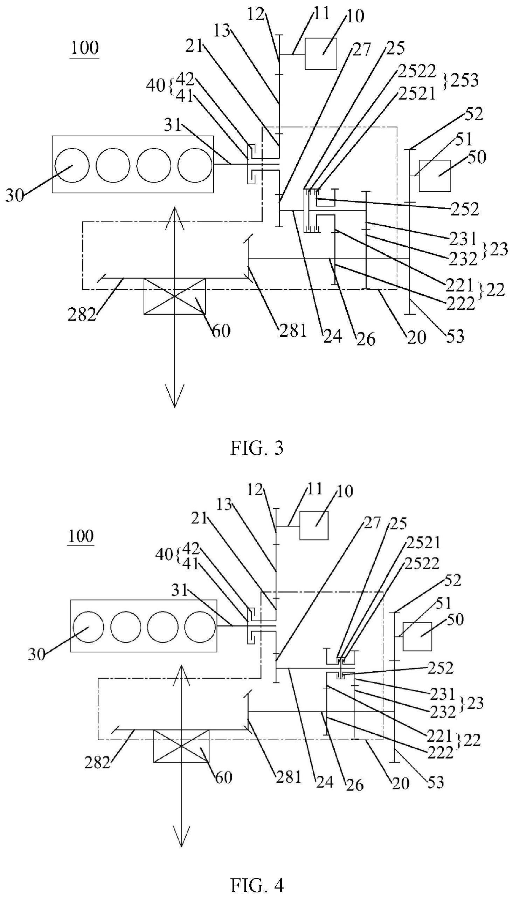

As shown in FIG. 2 and FIG. 3, based on that the transmission ratio of the first-speed gear pair 22 is different from that of the second-speed gear pair 23. It will be understood that in the hybrid power system 100 of the present disclosure, coupling and disconnection of the first sub-clutch 2521 and the second sub-clutch 2522 may be controlled to implement power switching of the hybrid power system 100 of the present disclosure between the first sub-state and the second sub-state, so as to adapt to different power outputs.

Based on that each second clutch 252 has an inner ring and an outer ring that are coaxially disposed, and the inner ring is rotatably connected to the outer ring. In addition, when the second clutch 252 is coupled, the inner ring is fixedly connected to the outer ring, thereby implementing synchronous rotation of the inner ring and the outer ring.

As shown in FIG. 2 and FIG. 3, outer rings of the first sub-clutch 2521 and the second sub-clutch 2522 are fixedly connected and integrally formed, to form a dual clutch 253. The input shaft 24 is fixedly connected to the outer rings of the first sub-clutch 2521 and the second sub-clutch 2522, so that the input shaft 24 rotates synchronously with the outer rings of the first sub-clutch 2521 and the second sub-clutch 2522.

Specifically, an end portion of the input shaft 24 away from the first drive gear 221 is provided with an inner hole (not shown in the figure). Both the first sub-clutch 2521 and the second sub-clutch 2522 are accommodated and fastened in the inner hole, to implement a fixed connection between the input shaft 24 and the outer rings of the first sub-clutch 2521 and the second sub-clutch 2522.

In the axial direction of the input shaft 24, an inner ring of the first sub-clutch 2521 passes through a central bore of the second drive gear 231 to be fixedly connected to the first drive gear 221, while the outer ring of the first sub-clutch 2521 is fixedly connected to the input shaft 24, thereby enabling the first sub-clutch 2521 to couple or disconnect power transmission between the input shaft 24 and the first drive gear 221.

In the axial direction of the input shaft 24, an inner ring of the second sub-clutch 2522 is fixedly connected to the second drive gear 231, while the outer ring of the second sub-clutch 2522 is fixedly connected to the input shaft 24, thereby enabling the second sub-clutch 2522 to couple or disconnect power transmission between the input shaft 24 and the second drive gear 231.

It will be understood that connection relationships among inner rings and outer rings of the first sub-clutch 2521 and the second sub-clutch 2522 of the dual clutch 253, and the input shaft 24, the first drive gear 221, and the second drive gear 231 may be other relationships. This is not specifically limited in the present disclosure.

In another embodiment, the dual clutch 253 may alternatively be disposed on the output shaft 26 and connected to the first power output gear 222 and the second power output gear 232. It will be understood that coupling or disconnection of the first sub-clutch 2521 and the second sub-clutch 2522 in the dual clutch 253 can implement power switching of the hybrid power system 100 of the present disclosure between the first-speed gear pair 22 and the second-speed gear pair 23.

In an embodiment, as shown in FIG. 2, the dual clutch 253 may be disposed at an end of the input shaft 24 close to the longitudinally mounted first electric motor 10. In another embodiment, the dual clutch 253 may alternatively be disposed at an end of the input shaft 24 away from the longitudinally mounted first electric motor 10. In another embodiment, the dual clutch 253 may alternatively be disposed at an end of the output shaft 26 close to the longitudinally mounted first electric motor 10. In another embodiment, the dual clutch 253 may alternatively be disposed at an end of the output shaft 26 away from the longitudinally mounted first electric motor 10.

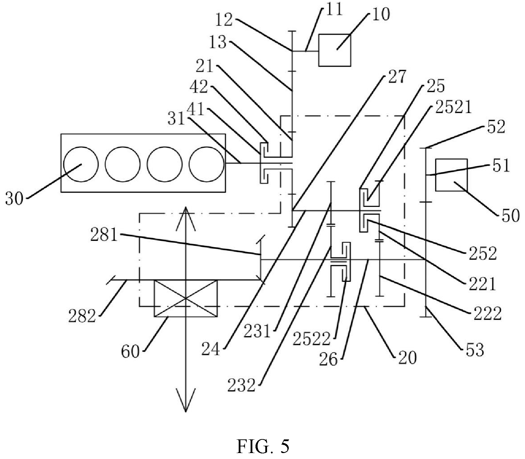

In an implementation, referring to FIG. 5, the transmission 20 includes an input shaft 24, two second clutches 252, and an output shaft 26. The two second clutches 252 are staggered. One of the two second clutches 252 is disposed on the input shaft 24, and the other is disposed on the output shaft 26.

Specifically, the first drive gear 221 meshes with the first power output gear 222, and the first sub-clutch 2521 is disposed on the input shaft 24. It will be understood that, when the first sub-clutch 2521 is coupled, the power transmitted by the input shaft 24 can be transmitted to the first sub-clutch 2521 and the first drive gear 221, and is output externally through the first power output gear 222.

The second drive gear 231 meshes with the second power output gear 232, and the second sub-clutch 2522 is disposed on the output shaft 26. It will be understood that, when the second sub-clutch 2522 is coupled, the power transmitted by the input shaft 24 can be transmitted to the second drive gear 231, and is output externally through the second sub-clutch 2522 and the second power output gear 232.

In an implementation, referring to FIG. 4, the transmission 20 includes an input shaft 24, two second clutches 252, and an output shaft 26. The two second clutches 252 are disposed back-to-back, and the two second clutches 252 are both disposed on the input shaft 24 or the output shaft 26.

Referring to FIG. 4, FIG. 4 is a schematic diagram of yet another structure of a hybrid power system 100 according to an embodiment of the present disclosure.

As shown in FIG. 4, outer rings of the first sub-clutch 2521 and the second sub-clutch 2522 are fixedly connected and integrally formed. The input shaft 24 extends into an inner ring of the first sub-clutch 2521, and is fixedly connected to the outer rings of the first sub-clutch 2521 and the second sub-clutch 2522, so that the input shaft 24 rotates synchronously with the outer rings of the first sub-clutch 2521 and the second sub-clutch 2522.

Specifically, as shown in FIG. 4, the transmission 20 further includes a connection member (not shown in the figure). The connection member is sleeved on a periphery of the first sub-clutch 2521 and the second sub-clutch 2522, and the input shaft 24 passes through a central bore of the first sub-clutch to be fixedly connected to the connection member, so as to implement a fixed connection between the input shaft 24 and the outer rings of the first sub-clutch 2521 and the second sub-clutch 2522.

In an axial direction of the input shaft 24, the inner ring of the first sub-clutch 2521 extends in a direction away from the second sub-clutch 2522 and is fixedly connected to the first drive gear 221 sleeved on the input shaft 24, while the outer ring of the first sub-clutch 2521 is fixedly connected to the input shaft 24, thereby enabling the first sub-clutch 2521 to couple or disconnect power transmission between the input shaft 24 and the first drive gear 221.

In the axial direction of the input shaft 24, the inner ring of the second sub-clutch 2522 extends in the direction away from the second sub-clutch 2522 and is fixedly connected to the second drive gear 231 sleeved on the input shaft 24, while the outer ring of the second sub-clutch 2522 is fixedly connected to the input shaft 24, thereby enabling the second sub-clutch 2522 to couple or disconnect power transmission between the input shaft 24 and the second drive gear 231.

It will be understood that the outer rings of the first sub-clutch 2521 and the second sub-clutch 2522 are fixedly connected, and the first drive gear 221 and the second drive gear 231 are disposed on two opposite sides of the first sub-clutch 2521 and the second sub-clutch 2522, so as to reduce radial space occupied due to mutual cooperation of the first sub-clutch 2521 and the second sub-clutch 2522, thereby improving space utilization of the hybrid power system 100 of the present disclosure in a radial direction of the input shaft 24.

It will be understood that in some other embodiments, connection relationships among inner rings and outer rings of the first sub-clutch 2521 and the second sub-clutch 2522, and the input shaft 24, the first drive gear 221, and the second drive gear 231 may be other relationships. This is not specifically limited in the present disclosure.

In an implementation, the first sub-clutch 2521 is connected between the input shaft 24 and the first drive gear 221, and the second sub-clutch 2522 is connected between the output shaft 26 and the second power output gear 232. In addition, end portions of the first sub-clutch 2521 and the second sub-clutch 2522 may be flush or staggered.

In this way, as shown in FIG. 1 to FIG. 5, the power switching assembly 25 is disposed as a synchronizer 251, two independent second clutches 252, or a dual clutch 253, to implement power switching between the first-speed gear pair 22 and the second-speed gear pair 23 that have different transmission ratios and that are between the input shaft 24 and the output shaft 26, so that the hybrid power system 100 adapts to different use scenarios.

It will be understood that, in some other embodiments, the power switching assembly 25 may alternatively be disposed as another apparatus that may be configured to implement power switching between the first-speed gear pair 22 and the second-speed gear pair 23.

In some other embodiments, the hybrid power system 100 of the present disclosure may further include a gear pair other than the first-speed gear pair 22 and the second-speed gear pair 23, and a corresponding power switching assembly 25 may also be disposed simultaneously as a synchronizer 251, two second clutches 252, and a dual clutch 253, so as to implement power switching between gear pairs with different transmission ratios.

In an implementation, referring to FIG. 2, the first clutch 40 is disposed in the longitudinally mounted first electric motor 10.

Specifically, the first end 41 of the first clutch 40 is accommodated in the second end 42. One end of the rotor of the longitudinally mounted first electric motor 10 is drivingly connected to the power input gear 21, and the other end is fixedly connected to the second end 42 of the first clutch 40. The first end 41 of the first clutch 40 is fixedly connected to the drive shaft 31. It will be understood that when the first clutch 40 is coupled, the engine 30 drives the drive shaft 31 to rotate and drives the second end 42 of the first clutch 40 to rotate.

A part of the power is transmitted to the rotor of the longitudinally mounted first electric motor 10 to enable the rotor to rotate, and electric energy is generated in cooperation with a stator (not shown in the figure). The electric energy is output to the battery pack. Another part of the power is transmitted to the power input gear 21 as the rotor rotates to drive the transmission 20 to rotate and output power externally.

In an implementation, the longitudinally mounted first electric motor 10 and the longitudinally mounted second electric motor 50 are configured such that: operating states of the longitudinally mounted first electric motor 10 and the longitudinally mounted second electric motor 50 are determined based on drive demand information of the vehicle, a target first efficiency map corresponding to the longitudinally mounted first electric motor 10, and a target second efficiency map corresponding to the longitudinally mounted second electric motor 50.

In an actual use process of the hybrid power system 100 of the present disclosure, the operating states of the longitudinally mounted first electric motor 10 and the longitudinally mounted second electric motor 50 may be determined based on a drive demand of the vehicle, the target first efficiency map corresponding to the longitudinally mounted first electric motor 10, and the target second efficiency map corresponding to the longitudinally mounted second electric motor 50.

An efficiency map of an electric motor is mainly used to reflect efficiency distribution of the electric motor when the electric motor operates at different rotational speeds and torque.

In an implementation, the longitudinally mounted first electric motor 10 and the longitudinally mounted second electric motor 50 are configured such that: when a torque demand corresponding to the drive demand information of the vehicle falls within torque corresponding to the target first efficiency map, the longitudinally mounted first electric motor 10 is controlled to independently drive the vehicle; and when the torque demand corresponding to the drive demand information of the vehicle falls within torque corresponding to the target second efficiency map, the longitudinally mounted second electric motor 50 is controlled to independently drive the vehicle.

In an actual use process of the hybrid power system 100 of the present disclosure, when the torque demand in the drive demand of the vehicle falls exactly within the torque corresponding to the target first efficiency map, the hybrid power system 100 of the present disclosure may control the longitudinally mounted first electric motor 10 to independently drive the vehicle.

When the torque demand in the drive demand of the vehicle falls exactly within the torque corresponding to the target second efficiency map, the hybrid power system 100 of the present disclosure may control the longitudinally mounted second electric motor 50 to independently drive the vehicle.

In an implementation, the longitudinally mounted first electric motor 10 and the longitudinally mounted second electric motor 50 are configured such that: when the torque demand corresponding to the drive demand information of the vehicle exceeds the torque corresponding to the target first efficiency map or exceeds the torque corresponding to the target second efficiency map, and the torque demand corresponding to the drive demand information of the vehicle does not exceed torque corresponding to a sum of the target first efficiency map and the target second efficiency map, the longitudinally mounted first electric motor 10 and the longitudinally mounted second electric motor 50 are controlled to jointly drive the vehicle.

When the torque demand in the drive demand of the vehicle exceeds the torque corresponding to the target first efficiency map, and exceeds the torque corresponding to the target second efficiency map, but does not exceed a sum of the torque corresponding to the target first efficiency map and the torque corresponding to the target second efficiency map, the longitudinally mounted first electric motor 10 and the longitudinally mounted second electric motor 50 are controlled to jointly drive the vehicle, and the one with higher power between the longitudinally mounted first electric motor 10 and the longitudinally mounted second electric motor 50 outputs maximum torque.

In an implementation, when the longitudinally mounted first electric motor 10 and the longitudinally mounted second electric motor 50 jointly drive the vehicle, the longitudinally mounted first electric motor 10 and the longitudinally mounted second electric motor 50 are configured such that: between the longitudinally mounted first electric motor 10 and the longitudinally mounted second electric motor 50, the one with higher power outputs the maximum torque.

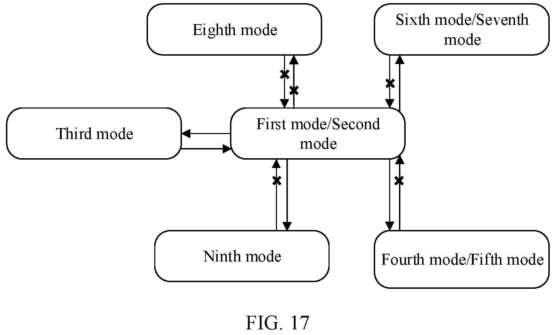

In an implementation, the hybrid power system 100 provided in the present disclosure includes ten power output modes. As shown in FIG. 17, a part of power output modes may be switched between one another, specifically including the following.

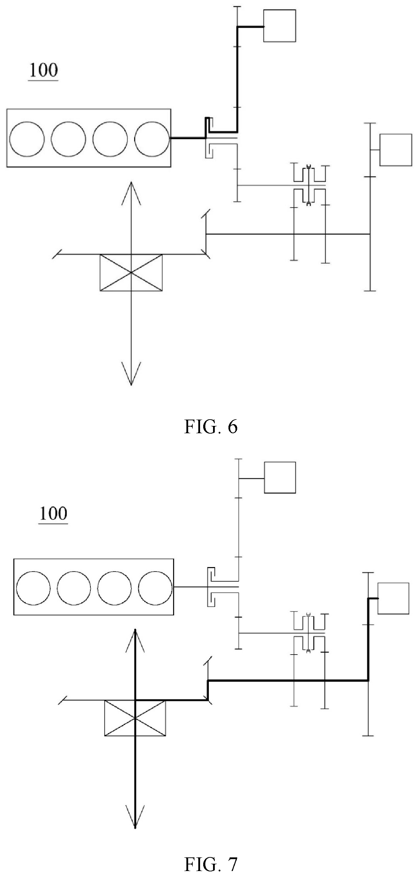

Referring to FIG. 6, FIG. 6 is a schematic diagram of power output of a hybrid power system 100 in a first mode according to an embodiment of the present disclosure. Referring to FIG. 1 as well, for ease of indicating a power output path, a bold line in FIG. 6 and a subsequent diagram represents a power transmission path. In addition, for ease of description, in FIG. 6 and a subsequent diagram, descriptions are performed based on FIG. 1. However, in an actual process, the hybrid power system 100 of the present disclosure may alternatively be any diagram in FIG. 2 to FIG. 4.

As shown in FIG. 1 and FIG. 6, in the first mode, the synchronizer 251 is in a disengaged state, the first clutch 40 is coupled, the engine 30 outputs power externally, the longitudinally mounted first electric motor 10 is configured as a generator, and the longitudinally mounted second electric motor 50 does not output power externally. The power from the engine 30 is transmitted to the first power shaft 11 sequentially through the drive shaft 31, the first clutch 40, the power input gear 21, the first intermediate gear 13, and the first power gear 12, thereby enabling the rotor of the longitudinally mounted first electric motor 10 to rotate and generate electric energy.

The part of electric energy is transmitted and stored in the battery pack (not shown in the figure), so as to implement charging of the battery pack by the engine 30 of the hybrid power system 100 of the present disclosure.

Referring to FIG. 7, FIG. 7 is a schematic diagram of power output of a hybrid power system 100 in a second mode according to an embodiment of the present disclosure. Reference is also made to FIG. 1.

As shown in FIG. 1 and FIG. 7, in the second mode, the synchronizer 251 is in the disengaged state, the first clutch 40 is disconnected, both of the longitudinally mounted first electric motor 10 and the engine 30 do not output power externally, and the longitudinally mounted second electric motor 50 outputs power externally. The electric energy in the battery pack (not shown in the figure) is transmitted to the longitudinally mounted second electric motor 50, and the longitudinally mounted second electric motor 50 outputs power. The power from the longitudinally mounted second electric motor 50 is output from the second power shaft 51, and is transmitted to the differential 60 sequentially through the second power gear 52, the third intermediate gear 53, the output shaft 26, the first bevel gear 281, and the second bevel gear 282. In this way, power output of the hybrid power system 100 of the present disclosure in the second mode is implemented.

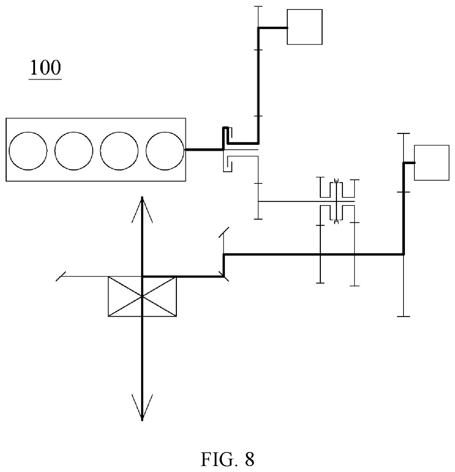

Referring to FIG. 8, FIG. 8 is a schematic diagram of power output of a hybrid power system 100 in a third mode according to an embodiment of the present disclosure. Reference is also made to FIG. 1.

As shown in FIG. 1 and FIG. 8, in the third mode, the synchronizer 251 is in the disengaged state, the first clutch 40 is coupled, the longitudinally mounted first electric motor 10 is configured as the generator, and the engine 30 and the longitudinally mounted second electric motor 50 output power externally. The power from the engine 30 is transmitted to the first power shaft 11 sequentially through the drive shaft 31, the first clutch 40, the power input gear 21, the first intermediate gear 13, and the first power gear 12, thereby enabling the rotor of the longitudinally mounted first electric motor 10 to rotate and generate electric energy.

The electric energy in the battery pack (not shown in the figure) is transmitted to the longitudinally mounted second electric motor 50, and the longitudinally mounted second electric motor 50 outputs power. The power from the longitudinally mounted second electric motor 50 is output from the second power shaft 51, is transmitted to the differential 60 sequentially through the second power gear 52, the third intermediate gear 53, the output shaft 26, the first bevel gear 281, and the second bevel gear 282, and is output externally by the differential 60. In this way, power output of the hybrid power system 100 of the present disclosure in the third mode is implemented.

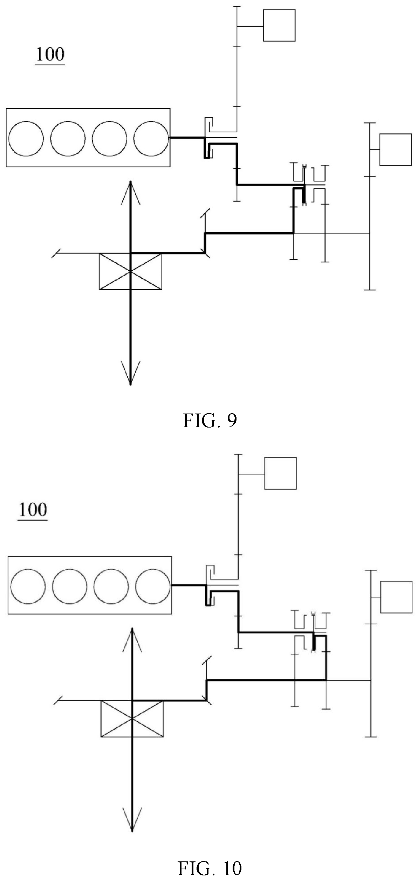

Referring to FIG. 9, FIG. 9 is a schematic diagram of power output of a hybrid power system 100 in a fourth mode according to an embodiment of the present disclosure. Reference is also made to FIG. 1.

As shown in FIG. 1 and FIG. 9, in the fourth mode, the synchronizer 251 fixedly connects the first drive gear 221 to the input shaft 24, the first clutch 40 is coupled, the longitudinally mounted first electric motor 10 and the longitudinally mounted second electric motor 50 are disconnected from the battery pack, and the engine 30 outputs power externally. The power from the engine 30 is output from the drive shaft 31, and is transmitted to the differential 60 sequentially through the first clutch 40, the power input gear 21, the second intermediate gear 27, the input shaft 24, the first drive gear 221, the first power output gear 222, the output shaft 26, the first bevel gear 281, and the second bevel gear 282, and is output externally by the differential 60. In this way, power output of the hybrid power system 100 of the present disclosure in the fourth mode is implemented.

Referring to FIG. 10, FIG. 10 is a schematic diagram of power output of a hybrid power system 100 in a fifth mode according to an embodiment of the present disclosure. Reference is also made to FIG. 1.

As shown in FIG. 1 and FIG. 10, in the fifth mode, the synchronizer 251 fixedly connects the second drive gear 231 to the input shaft 24, the first clutch 40 is coupled, the longitudinally mounted first electric motor 10 and the longitudinally mounted second electric motor 50 are disconnected from the battery pack, and the engine 30 outputs power externally. The power from the engine 30 is output from the drive shaft 31, and is transmitted to the differential 60 sequentially through the first clutch 40, the power input gear 21, the second intermediate gear 27, the input shaft 24, the second drive gear 231, the second power output gear 232, the output shaft 26, the first bevel gear 281, and the second bevel gear 282, and is output externally by the differential 60. In this way, power output of the hybrid power system 100 of the present disclosure in the fifth mode is implemented.

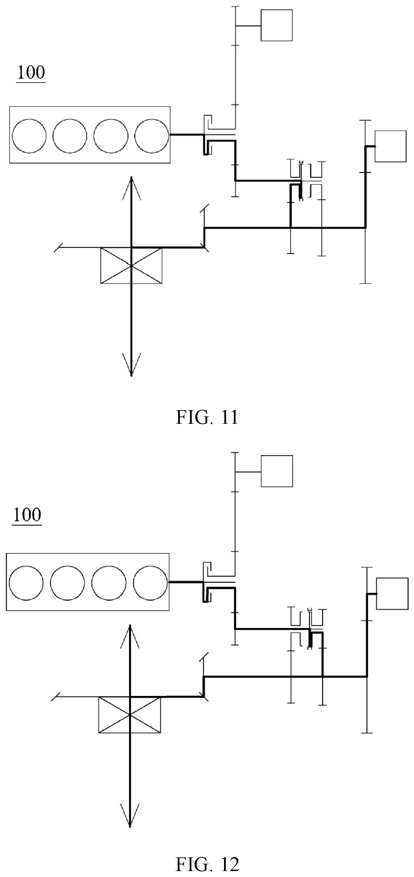

Referring to FIG. 11, FIG. 11 is a schematic diagram of power output of a hybrid power system 100 in a sixth mode according to an embodiment of the present disclosure. Reference is also made to FIG. 1.

As shown in FIG. 1 and FIG. 11, in the sixth mode, the synchronizer 251 fixedly connects the first drive gear 221 to the input shaft 24, the first clutch 40 is coupled, the longitudinally mounted first electric motor 10 is disconnected from the battery pack, and the longitudinally mounted second electric motor 50 and the engine 30 output power externally. The power from the engine 30 is output from the drive shaft 31, and is transmitted to the differential 60 sequentially through the first clutch 40, the power input gear 21, the second intermediate gear 27, the input shaft 24, the first drive gear 221, the first power output gear 222, the output shaft 26, the first bevel gear 281, and the second bevel gear 282, and is output externally by the differential 60.

The electric energy in the battery pack is transmitted to the longitudinally mounted second electric motor 50, and the longitudinally mounted second electric motor 50 outputs power. The power from the longitudinally mounted second electric motor 50 is output from the second power shaft 51, is transmitted to the differential 60 sequentially through the second power gear 52, the third intermediate gear 53, the output shaft 26, the first bevel gear 281, and the second bevel gear 282, and is output externally by the differential 60.

It will be understood that the power output by the engine 30 and the longitudinally mounted second electric motor 50 is combined on the output shaft 26 and is transmitted to the differential 60, and is output externally by the differential 60. In this way, power output of the hybrid power system 100 of the present disclosure in the sixth mode is implemented.

Referring to FIG. 12, FIG. 12 is a schematic diagram of power output of a hybrid power system 100 in a seventh mode according to an embodiment of the present disclosure. Reference is also made to FIG. 1.

As shown in FIG. 1 and FIG. 12, in the seventh mode, the synchronizer 251 fixedly connects the second drive gear 231 to the input shaft 24, the first clutch 40 is coupled, the longitudinally mounted first electric motor 10 is disconnected from the battery pack, and the longitudinally mounted second electric motor 50 and the engine 30 output power externally. The power from the engine 30 is output from the drive shaft 31, and is transmitted to the differential 60 sequentially through the first clutch 40, the power input gear 21, the second intermediate gear 27, the input shaft 24, the second drive gear 231, the second power output gear 232, the output shaft 26, the first bevel gear 281, and the second bevel gear 282, and is output externally by the differential 60.

The electric energy in the battery pack is transmitted to the longitudinally mounted second electric motor 50, and the longitudinally mounted second electric motor 50 outputs power. The power from the longitudinally mounted second electric motor 50 is output from the second power shaft 51, is transmitted to the differential 60 sequentially through the second power gear 52, the third intermediate gear 53, the output shaft 26, the first bevel gear 281, and the second bevel gear 282, and is output externally by the differential 60.

It will be understood that the power output by the engine 30 and the longitudinally mounted second electric motor 50 is combined on the power output shaft 26 and is transmitted to the differential 60, and is output externally by the differential 60. In this way, power output of the hybrid power system 100 of the present disclosure in the seventh mode is implemented.

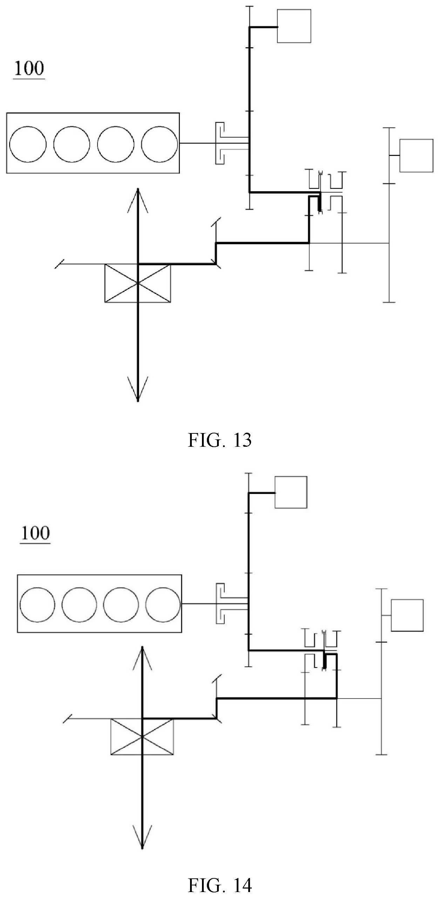

Referring to FIG. 13, FIG. 13 is a schematic diagram of power output of a hybrid power system 100 in an eighth mode according to an embodiment of the present disclosure. Reference is also made to FIG. 1. The ninth mode is the foregoing first sub-state. For details, refer to the foregoing implementations. Details are not described herein again.

Referring to FIG. 14, FIG. 14 is a schematic diagram of power output of a hybrid power system 100 in a ninth mode according to an embodiment of the present disclosure. Reference is also made to FIG. 1. The ninth mode is the foregoing second sub-state. For details, refer to the foregoing implementations. Details are not described herein again.

Referring to FIG. 15, FIG. 15 is a schematic diagram of power output of a hybrid power system 100 in a tenth mode according to an embodiment of the present disclosure. Reference is also made to FIG. 1.

As shown in FIG. 1 and FIG. 15, in the tenth mode, the longitudinally mounted first electric motor 10 is disconnected from the battery pack, the engine 30 does not output power externally, the longitudinally mounted second electric motor 50 is configured as the generator, and the synchronizer 251 is in the disengaged state. The external wheel (not shown in the figure) drives the transmission 20 by means of inertia to transmit power to the second bevel gear 282. The power is transmitted to the second power shaft 51 sequentially through the first bevel gear 281, the power output shaft 26, the third intermediate gear 53, and the second power gear 52 and drives a rotor (not shown in the figure) of the longitudinally mounted second electric motor 50 to rotate, thereby enabling the longitudinally mounted second electric motor 50 to generate electrical energy, and the electric energy is transmitted to the battery pack.

It will be understood that, in the tenth mode, the hybrid power system 100 of the present disclosure is in a braking state. Dynamic energy generated during a wheel braking process is converted into electric energy by means of inertia of the vehicle and the electric energy is fed back to the battery pack, so as to implement power generation braking of the hybrid power system 100 of the present disclosure.

It will be understood that the hybrid power system 100 of the present disclosure may further implement remaining power output by adjusting drive participation states of the longitudinally mounted first electric motor 10, the engine 30, and the longitudinally mounted second electric motor 50, as well as connection and disconnection states of the first clutch 40 and the synchronizer 251. This is not specifically limited in the present disclosure.

In an implementation, the present disclosure provides a vehicle, where the vehicle includes a wheel and a hybrid power system 100. The hybrid power system 100 is drivingly connected to the wheel, so that power output by the hybrid power system 100 can be transmitted to the wheel and drive the wheel to rotate, thereby driving the vehicle.

In the descriptions of the embodiments of the present disclosure, it will be understood that the orientations or positional relationships indicated by the terms "center", "upper", "lower", "left", "right", "vertical", "horizontal", "inner", "outer", and the like are based on the orientation or positional relationship in the accompanying drawings, and are only for ease of describing the present disclosure and simplifying the description, rather than indicating or implying that an indicated apparatus or element must have a specific orientation or must be constructed and operated in a specific orientation. Therefore, this will not be understood as a limitation on the present disclosure.

The foregoing descriptions are merely example embodiments of the present disclosure, and certainly are not intended to limit the protection scope of the present disclosure. A person of ordinary skill in the art may understand all or some procedures for implementing the foregoing embodiments, and equivalent variations made in accordance with the claims of the present disclosure shall fall within the scope of the present disclosure.

## Claims

1. A hybrid power system (100), comprising an engine (30), a longitudinally mounted first electric motor (10), a longitudinally mounted second electric motor (50), and a first clutch (40), the first clutch (40) being drivingly connected to the engine (30) and the longitudinally mounted first electric motor (10) respectively; and
the hybrid power system (100) comprising a first state, and when in the first state, the first clutch (40) disconnecting the engine (30) from the longitudinally mounted first electric motor (10), and the longitudinally mounted first electric motor (10) and the longitudinally mounted second electric motor (50) jointly driving a vehicle.

2. The hybrid power system (100) according to claim 1, wherein the hybrid power system (100) further comprises a transmission (20), and the transmission (20) has at least two gear positions; and
the hybrid power system (100) comprises a second state, and when in the second state, the first clutch (40) disconnects the engine (30) from the longitudinally mounted first electric motor (10), the longitudinally mounted first electric motor (10) and the longitudinally mounted second electric motor (50) jointly drive the vehicle, and the transmission (20) shifts between the at least two gear positions.

3. The hybrid power system (100) according to claim 2, wherein the transmission (20) comprises a first gear position and a second gear position, and the first gear position and the second gear position have different transmission ratios; and
the second state comprises a first sub-state and a second sub-state, and when in the first sub-state, the longitudinally mounted first electric motor (10) drives the vehicle by using the first gear position, and when in the second sub-state, the longitudinally mounted first electric motor (10) drives the vehicle by using the second gear position.

4. The hybrid power system (100) according to claim 1, wherein the first clutch (40) is reused as a parking power generation clutch, and the first clutch (40) connects the engine (30) to the longitudinally mounted first electric motor (10).

5. The hybrid power system (100) according to claim 2, wherein the transmission (20) comprises an input shaft (24), two second clutches (252), and an output shaft (26), the two second clutches (252) are disposed back-to-back, and the two second clutches (252) are both disposed on the input shaft (24) or the output shaft (26).

6. The hybrid power system (100) according to claim 2, wherein the transmission (20) comprises an input shaft (24), two second clutches (252), and an output shaft (26), the two second clutches (252) are staggered, one of the two second clutches (252) is disposed on the input shaft (24), and the other is disposed on the output shaft (26).

7. The hybrid power system (100) according to claim 2, wherein the transmission (20) comprises an input shaft (24), a dual clutch (253), and an output shaft (26), and the dual clutch (253) is disposed on the input shaft (24) or disposed on the output shaft (26);
an end portion of the dual clutch (253) is disposed close to an end of the longitudinally mounted first electric motor (10); or
an end portion of the dual clutch (253) is disposed close to an end of the longitudinally mounted second electric motor (50).

8. The hybrid power system (100) according to claim 1, wherein the first clutch (40) is disposed in the longitudinally mounted first electric motor (10).

9. The hybrid power system (100) according to claim 1, wherein the longitudinally mounted first electric motor (10) and the longitudinally mounted second electric motor (50) are configured such that:
operating states of the longitudinally mounted first electric motor (10) and the longitudinally mounted second electric motor (50) are determined based on drive demand information of the vehicle, a target first efficiency map corresponding to the longitudinally mounted first electric motor (10), and a target second efficiency map corresponding to the longitudinally mounted second electric motor (50).

10. The hybrid power system (100) according to claim 9, wherein the longitudinally mounted first electric motor (10) and the longitudinally mounted second electric motor (50) are configured such that:
when a torque demand corresponding to the drive demand information of the vehicle falls within torque corresponding to the target first efficiency map, the longitudinally mounted first electric motor (10) is controlled to independently drive the vehicle; and
when the torque demand corresponding to the drive demand information of the vehicle falls within torque corresponding to the target second efficiency map, the longitudinally mounted second electric motor (50) is controlled to independently drive the vehicle.

11. The hybrid power system (100) according to claim 9, wherein the longitudinally mounted first electric motor (10) and the longitudinally mounted second electric motor (50) are configured such that:
when the torque demand corresponding to the drive demand information of the vehicle exceeds the torque corresponding to the target first efficiency map or exceeds the torque corresponding to the target second efficiency map, and the torque demand corresponding to the drive demand information of the vehicle does not exceed torque corresponding to a sum of the target first efficiency map and the target second efficiency map, the longitudinally mounted first electric motor (10) and the longitudinally mounted second electric motor (50) are controlled to jointly drive the vehicle.

12. The hybrid power system (100) according to claim **11,** wherein when the longitudinally mounted first electric motor (10) and the longitudinally mounted second electric motor (50) jointly drive the vehicle, the longitudinally mounted first electric motor (10) and the longitudinally mounted second electric motor (50) are configured such that:
between the longitudinally mounted first electric motor (10) and the longitudinally mounted second electric motor (50), the one with higher power outputs maximum torque.

13. A vehicle, comprising the hybrid power system (100) according to any one of claims 1 to 12.
